# EUROPEAN PATENT APPLICATION

(11) **EP 4 641 375 A1**
(43) Date of publication of application: **29.10.2025**
(21) Application number: 24172437.6
(22) Date of filing: 25.04.2024
(51) Int. Cl.: G06F 9/451, G06F 16/957, G06T 1/20, G06T 15/00

(54) **IMAGE RENDERING IN AN IMAGE RENDERING ENVIRONMENT**

(71) Applicant: ABB SCHWEIZ AG, 5400 Baden (CH)
(72) Inventor: BORG, Mikael, 724 62 Västerås (SE); VACH, Michael, 69259 Wilhelmsfeld (DE)
(74) Representative: Kransell & Wennborg KB

(57) **Abstract**

The invention relates to an image rendering device, a user terminal comprising such a device as well as to a method, computer program and computer program product for rendering an image that has been created in a first image rendering environment. The image rendering device (48) comprises a function call converter (58) that receives, from a graphics engine (50) associated with the first environment, a call (Calli) for the use of commands in a library of drawing functions associated with the first environment, the call (Calli) being a call for the drawing of an image (I) using one or more drawing commands in the library, converts, in a converting function, the at least one drawing command to at least one drawing instruction of a second image rendering environment (56) and applies the at least one drawing instruction in the second environment (56) in order to draw the image (I).

## Description

### TECHNICAL FIELD

The invention relates to an image rendering device, a user terminal comprising such a device as well as a method, computer program and computer program product for rendering an image that has been created in a first image rendering environment.

### BACKGROUND

Process control systems may have a number of images that are used to display different parts and process states of the system.

These images may have been created using a graphics engine associated with a first image rendering environment, such as the graphics engine used in the .NET environment. Images may then be displayed by an associated drawing platform with the aid of a library of drawing commands, which in the example of Microsoft Windows^{®} is Windows Presentation Foundation (WPF) using DirectX. However, this also makes it impossible to render such images in other image rendering environments such as HTML.

There is thus a need for allowing images that have been created by a graphics engine associated with a first image rendering environment to be rendered in a second image rendering environment.

### SUMMARY

One object of the invention is therefore to allow images that have been created by a graphics engine associated with a first image rendering environment to be rendered in a second image rendering environment.

This object is according to a first aspect achieved by an image rendering device comprising a processor configured to provide a function call converter operative to:
receive, from a graphics engine associated with a first image rendering environment, a call for the use of commands in a library of drawing functions, the call being a call for the drawing of an image using one or more drawing commands in the library and which library is associated with the first image rendering environment,
convert, in a converting function, the at least one drawing command to at least one drawing instruction of a second image rendering environment; and
apply the at least one drawing instruction in the second image rendering environment in order to draw the image.

The object is according to a second aspect achieved through a user terminal comprising an image rendering device according to the first aspect.

The object is according to a third aspect achieved through a method of rendering an image that has been created in a first image rendering environment, the method being performed by an image rendering device and comprising:
receiving from a graphics engine associated with the first image rendering environment, a call for the use of commands in a library of drawing functions, the call being a call for the drawing of an image using one or more drawing commands in the library and which library is associated with the first image rendering environment,
converting, in a converting function, the at least one drawing command to at least one drawing instruction of a second image rendering environment; and
applying the at least one drawing instruction in the second image rendering environment in order to draw the image.

The object is according to a fourth aspect further achieved through a computer program for rendering an image that has been created in a first image rendering environment, the computer program comprising computer program code which when run in a processor, causes the processor to provide a function call converter operative to:
receive, from a graphics engine associated with a first image rendering environment, a call for the use of commands in a library of drawing functions, the call being a call for the drawing of an image using one or more drawing commands in the library and which library is associated with the first image rendering environment,
convert, in a converting function, the at least one drawing command to at least one drawing instruction of a second image rendering environment; and
apply the at least one drawing instruction in the second image rendering environment in order to draw the image.

The object is according to a fifth aspect further achieved through a computer program product for rendering an image that has been created in a first image rendering environment, the computer program product comprising a data carrier with the computer program code according to the fourth aspect.

The image rendering device may be proved for a process control system. Thereby, the image rendering device may be provided for rendering images of the process control system.

The image rendering device may additionally comprise the graphics engine. The processor of the image rendering device may thus be configured to provide the graphics engine.

According to one variation of the first aspect, the graphics engine may in this case be operative to obtain a configuration, which configuration comprises information about the image that is to be rendered and possibly also process data from the process control system and/or user inputs from a user of the process control system, and send the call for the use of commands in the library of drawing functions.

The method may in a corresponding variation of the third aspect comprise obtaining a configuration, which configuration comprises information about the image that is to be rendered and possibly also process data from the process control system and/or user inputs from a user of the process control system, and sending the call for the use of commands in the library of drawing functions.

The call may comprise instructions for forming at least two visual components within the image, which visual components may be linked to each other in an order.

According to another variation of the first aspect, the function call converter is in this case further operative to create a number of component functions, each component function being dedicated to a corresponding visual component as well as to create a linking function, set to link the component functions to each other according to the order.

According to a corresponding variation of the third aspect, the method in this case further comprises creating a number of component functions, each component function being dedicated to a corresponding visual component as well as creating a linking function set to link the component functions to each other according to the order.

In this case, the converting function may also get linked to the component functions by the linking function.

The functions may additionally be provided as callbacks.

Moreover, the function call converter may comprise a mock command library and a rendering function implementation, where the mock command library implements the same interfaces as the library of drawing functions and is compiled against the graphics engine and the rendering function implementation comprises rendering implementations of functions created or provided in the function call converter.

The image rendering device may additionally comprise a model associated with the image being rendered in the second image rendering environment.

According to a further variation of the first aspect, the function call converter may in this case be further operative to update the model cyclically based on user input and/or process data from the process control system.

According to a corresponding variation of the third aspect, the method may further comprise updating the model cyclically based on user input and/or process data from the process control system.

The user input may be user input made by an operator of the operator terminal.

The image rendering device may also comprise a render buffer and the model may comprise render fragments that together make up the image that is rendered in the second image rendering environment. In this case the cyclical updating may involve at least one render fragment being changed based on the user input and/or process data.

According to another variation of the first aspect, the function call converter is in this case further operative to store render fragments that are changed in the render buffer and update the rendered image through replacing render fragments with corresponding changed render fragments from the render buffer.

According to a corresponding variation of the third aspect, the method in this case further comprises storing render fragments that are changed in the render buffer and updating the rendered image through replacing render fragments with corresponding changed render fragments from the render buffer.

According to another variation of the first aspect, the function call converter is operative to store all commands used for creating the image in the model.

According to a corresponding variation of the third aspect, the method further comprises storing all commands used for creating the image in the model.

In the above-mentioned variations, the rendering of the image is additionally performed using all the commands in the model and the cyclical updating involves replacing all commands in the model when receiving a new call from the graphics engine.

According to another variation of the first aspect, the function call converter is operative to determine lightweight rendering commands for rendering the image, to store the lightweight rendering commands in the model and to translate the lightweight rendering commands to actual rendering commands for rendering the image.

According to a corresponding variation of the third aspect, the method further comprises determining lightweight rendering commands for rendering the image, storing the lightweight rendering commands in the model and translating the lightweight rendering commands to actual rendering commands for rendering the image.

A lightweight command may only include or consist of information needed to create a render fragment.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The invention will now be described in more detail in relation to the enclosed drawings, in which:
fig. 1 schematically shows a process control system comprising a number of user terminals,
fig. 2 shows a block schematic of a user terminal,
fig. 3 shows an example image,
fig. 4 schematically shows an image rendering device comprising a graphics engine and a function call converter that includes a mock command library and a rendering implementation,
fig. 5 shows method steps performed by the graphics engine,
fig. 6 shows a number of method steps being performed by the function call converter,
fig. 7 shows a signal chart of signals exchanged between the process control system, the graphics engine, the mock command library, the rendering implementation and an image rendering environment,
fig. 8 schematically shows the graphics engine, the mock command library and the rendering implementation together with a model and a render buffer,
fig. 9 shows method steps for updating a rendered image,
fig. 10 shows a signal chart of signals exchanged between the process control system, the graphics engine, the mock command library, the rendering implementation, the model, the render buffer and the image rendering environment,
fig. 11 schematically shows the graphics engine, the mock command library, the rendering implementation and the model,
fig. 12 shows alternative method steps for updating a rendered image,
fig. 13 shows signals exchanged between the process control system, the graphics engine, the mock command library, the rendering implementation, the model and the second image rendering environment, and
fig. 14 shows a computer program product in the form of a CD ROM disc with a computer program implementing the function call converter.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards a process control system and more particularly towards the display of images in or for the process control system.

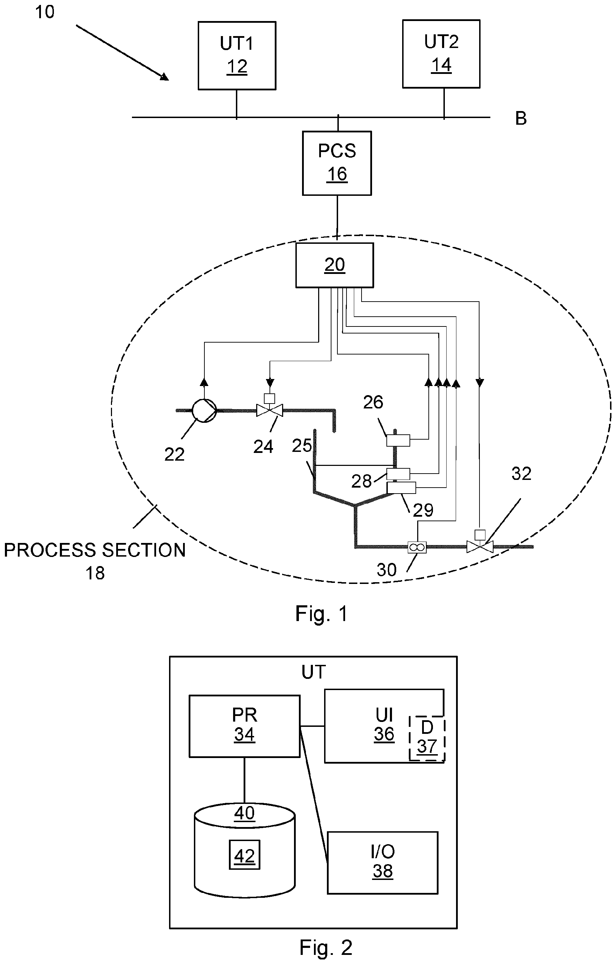

Fig. 1 schematically shows a process control system 10 for controlling an industrial process or perhaps part of an industrial process. Typical processes are electrical power generation, transmission, distribution and supply processes, water purification and distribution processes, oil and gas production and distribution processes, petrochemical, chemical, pharmaceutical and food processes, and pulp and paper production processes. These are just some examples of processes where the system can be applied. There exist countless other processes. Normally there may in such a system be one or more controllers having some local software for controlling one or more pieces of process control equipment. The process control equipment may comprise equipment that influence or measure different properties of the technical process. A piece of process control equipment may for instance be a pump, a motor, a valve, etc. A process, or a part of a process, may be controlled via a server, which then typically communicates with a controller for providing local control. The process may be monitored through an operator terminal or workstation, which communicates with the server. Such a workstation or operator terminal is also a form of user terminal.

In fig. 1 the system 10 therefore includes a number of user terminals UT1 12 and UT2 14 connected to a bus B. There is in this case a first user terminal UT1 12 and a second user terminal UT2 14. There is furthermore a process control server PCS 16 connected to the bus B, which process control server 16 comprises a control function for controlling the process. The control performed by the process control server 16 could be performed using one or more controllers. As an example, one controller 20 (Process Controller or Programmable Logic Controller (PLC)) is shown.

In the control there may be a number of pieces of process control equipment. As an example, the controller 20 is shown as being connected to process control equipment in a process section 18 for controlling a part of the industrial process, which process section 18 includes a first inlet pipe leading to a tank 25 and a second outlet pipe leaving the tank 25. In the first pipe there is provided a pump 22 that pumps fluid into the first pipe as well as a first valve 24. In the tank 25 there are provided two level sensors 26 and 28 and in the outlet pipe there is provided a flow meter 30 and a second valve 32. There is also a temperature sensor 29 in the tank 25. The pipes, tank, valves and sensors are examples of process control equipment. The level sensors 26 and 28 measure the physical quantity liquid volume, the temperature sensor measures the physical quantity liquid temperature and the flow meter 30 measures the physical quantity volumetric flow rate of the liquid. The controller 20 may receive control input values from the pump 22, level sensors 26 and 28 and temperature sensor 29 and regulate the liquid level in the tank 25 based on these control input values through controlling the first valve 24. It also receives control input values from the flow meter 30 and temperature sensor 29 and controls the second valve 32 for regulating the output fluid flow.

The above-described control is merely an example of one type of control in a process control example. It should be realized that several different other types of control are possible and that several other types of physical quantities can be measured.

Moreover, the process control system may comprise several different sections with control equipment.

Fig. 2 schematically shows one realization of a user terminal UT. There is a processor PR 34 and a data storage 40 with computer program instructions 42 that, when executed by the processor 34, implements image rendering functionality of an image rendering device. More particularly, the computer program instructions comprise computer program instructions implementing a function call converter. It also typically involves computer program instructions implementing a graphics engine. The memory 40 may also provide storage for a model and a render buffer. These entities will be described in more detail later. The computer program instructions may additionally implement a browser.

The user terminal also comprises an input/output (I/O) interface 38 for communication with other entities in the process control system like the process control server 16. Finally, there is a user interface UI 36 which comprises a display D 37 for displaying information about the process and the process control system to a user, such as an operator. The display 37 may be a touch screen display allowing the user to input data and commands as well as to move a pointer or to selected objects in different screens. It should be realized that the user interface 36 may also or instead comprise other means of allowing user input, such as a mouse or trackball, a keyboard or a keypad. Additionally, the user terminal may be a wireless user terminal, such as smartphone, in which case the communication interface may be a wireless communication interface for communicating via a wireless communication network.

When performing control in the process control system, a great number of images may be used to display different sections of the process control system as well as the status or state of the process, alarms and details of the pieces of process control system. Thus, there may be a great number of images existing in the process control system being used.

Such images have often been generated using a graphics engine associated with a first image rendering environment, such as a graphics engine of the .NET environment provided by Microsoft Windows^{®}.

This graphics engine makes use of a predefined set of functions in a 3^{rd} party library of drawing functions for rendering graphics in the first image rendering environment. Thereby also the library of drawing functions is associated with the first image rendering environment.

However, it is of interest to be able to render the graphics also in other image rendering environments, such as in a HyperText MarkupLangue (HTML) environment used by browsers. This enables the rendering of the images also on wireless terminals, such as smart phones. This may be desirable if service personnel performing maintenance are to view process graphics. Such wireless terminals are typically equipped with browsers, but more seldom use the first image rendering environment.

The above-mentioned images are not possible to render in a browser. Aspects of the present disclosure are directed towards solving this. Aspects of the present disclosure are thus concerned with allowing images generated using the above-mentioned graphics engine that is associated with the first image rendering environment to also be used in a second image rendering environment.

How this can be done will now be disclosed in more detail.

Before describing the various aspects, it is good to get an understanding of the functioning of the graphics engine in the first image rendering environment.

The graphics engine may make use of a configuration, process data and user input to calculate how graphics should look like. A very simple example of a configuration of a process display could be described as follows:
1. Draw a rectangle starting at position (10,10) with an extent in width of 100 pixels and a height of 25 pixels, having a black 2 pixel stroke and gray background.
2. Draw a black text based on the input value from a system named 'Process Value', convert this into a string with 2 decimal places and draw this at position (3, 3) using the Arial font with 13 pixels of height.

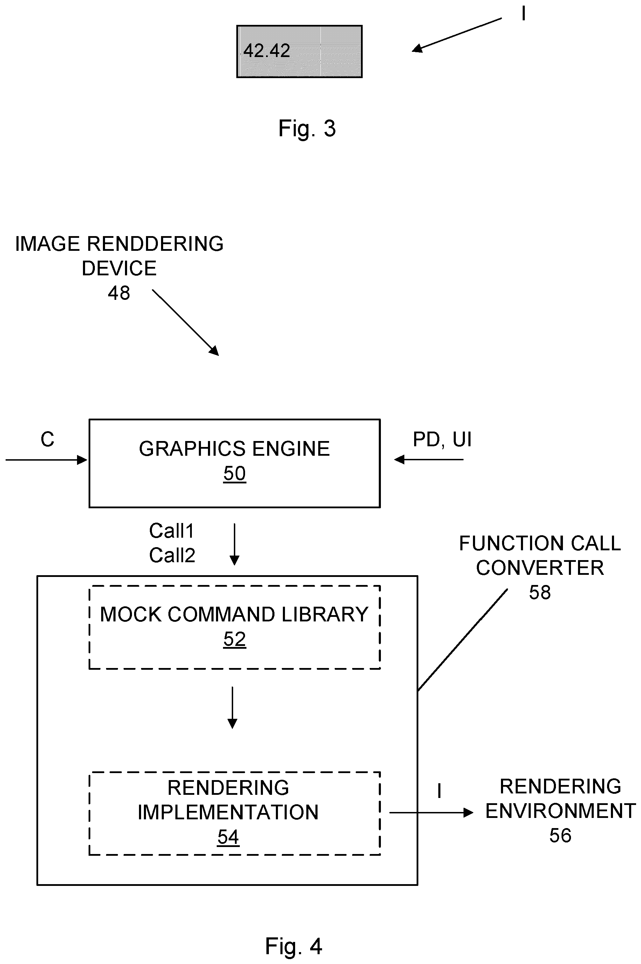

The resulting graphic display could look something like the image I in fig. 3.

To draw the graphics display, the graphics engine may make use of a library of drawing commands. In the case of Windows^{®}, this library is called Windows Presentation Foundation (WPF). The library provides means of creating visual components, organizing them hierarchically and transforming them. WPF retains the visual components and any change in any component will make the updated area to be updated also visually. A Call to WPF could in the above-given example in simplified code be like the following:

```
 display = new System.Windows.Media.ContainerVisual()
 display. Width = 250
 display.Height = 100
 display. Background = White
 drawing = new System.Windows.Media.DrawingVisual()
 drawing. Transform = Move(3, 3)
 display.AddChild(drawing)
 drawingContext = display.OpenDrawingContext();
 drawingContext.DrawRectangle(X=0, Y=0, Width=100, Height=25,
 StrokeWidth=2, StrokeCol-or=Black, Background=Gray)
 drawingContext.DrawText(X=3, Y=3, Value = "42.42", Font=Arial,
 Size=13, Color=Black)
 drawingContext.Close()
```

In the example above, a main visual component for the background is created using constructors on a container class derived from a Visual class. Another container visual is created to contain the rectangle. The second visual is added to the first visual as a child, adding a transform to position the second visual at (10, 10). On the second visual, a rectangle and a text is drawn. The resulting visual tree in WPF could look something like:

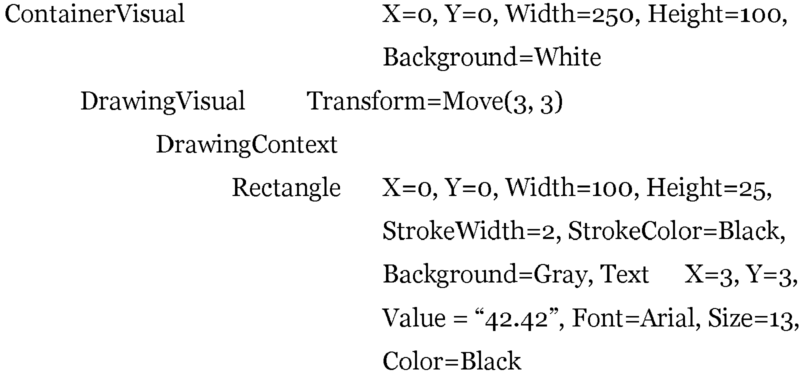

However, such a library is typically exclusive to the first image rendering environment. It is not available in the second image rendering environment, such as a browser-based or HTML image rending environment.

Thus, if there are images created with the graphics engine of the first image rendering environment, then it is not possible to render them in the second image rendering environment.

Aspects of the present disclosure are directed towards allowing images created by a graphics engine associated with the first image rendering environment to be rendered in the second image rendering environment.

Aspects of the present disclosure are directed towards providing an image rendering device at least partly implemented via the previously-described processor and at least comprising a function call converter.

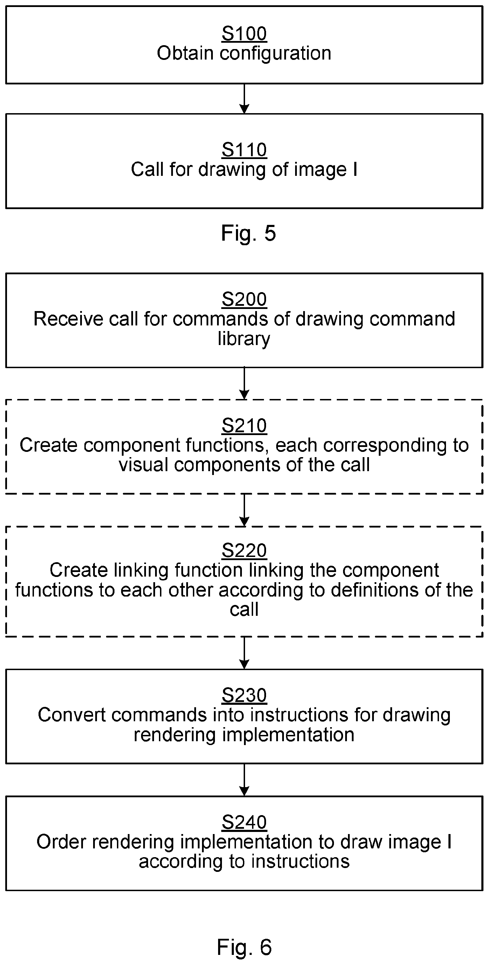

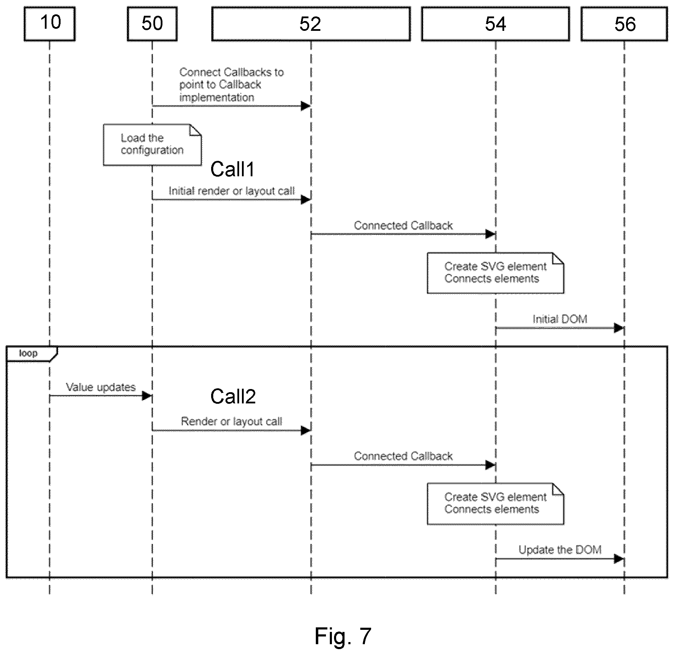

How this may be done will now be described in more detail with reference being made to fig. 4, 5, 6 and 7, where fig. 4 schematically shows an image rendering device 48 comprising a graphics engine 50 that communicates with a mock command library 52, which in turn communicates with a rendering implementation 54, where the combination of mock command library 52 and rendering implementation 54 together form a function call converter 58, fig. 5 shows a number of method steps performed by the graphics engine 50, fig. 6 shows a number of steps being performed in the function call converter 58 and fig. 7 shows a signal chart of signal exchanged between the different entities.

As can be seen in fig. 7, the graphics engine 50 is a part of the image rendering device 48. However, it should be realized that as an alternative it is not a part of the image rendering device 48, but is an entity with which the image rendering device 48 communicates.

To be able to re-use the graphics engine 50 in a second image rendering environment 56, such as in a web-browser or the HTML environment, it is not possible to use WPF when rendering the graphics.

Aspects of the present disclosure, propose replacing the rendering WPF layer by something else. To be able to replace the rendering layer without changing the graphics engine code, a mock implementation of the library of commands, with the same namespaces and method signature, may be provided and used by the code of the graphics engine. The graphics engine code may then be compiled against the mock command library.

The operation may start with the graphics engine 50 obtaining a configuration C, S100, which configuration comprises information about the image I that is to be rendered. The graphics engine 50 may also receive process data PD from the process control system and/or user inputs UI from a user of the process control system 10. The configuration C in this case includes information that the graphics engine 50 uses for the rendering of an image I, in which image I it is possible to insert process data values from the process control system 10 or which the user may influence. The graphics engine 50 then calls for the use of commands in a library of drawing functions in order to draw the image I, S110. This is done through the sending of a first call, Calli. The call is sent as a call to a library of commands associated with the first image rendering environment, here the WPF library. The call, Calli, is thus a call for the use of commands in a library of a first set of drawing functions provided in the first image rendering environment. This would have been done through sending the configurations and any data that is to be inserted in or influence the image to the associated command library of the first image rendering environment. However, this is no longer possible as the image is to be rendered in the second image rendering environment.

In order to handle the situation, there is provided a function call converter 58, which converts the call Calli to a format that is possible to use in the second image rendering environment 56, which second image rendering environment 56 may be an HTML environment.

Thus, the call Calli is sent to the function call converter 58. The function call converter 58 comprises the mock implementation of the command library and a rendering implementation 54. The mock command library 52 is a component that implements the same interfaces and drawing commands as the command library associated with the first image rendering environment, in this case WPF, but instead of using a native drawing layer, callbacks from the mock implementation is done in order to be able to render on any selected platform, such as Scalable Vector Graphics (SVG). Callbacks are implemented in the rendering implementation 54. As was mentioned earlier the mock command library 52 is also compiled against the graphics engine 50. The rendering implementation 54 is in turn a rendering function implementation that comprises rendering implementations of functions created or provided in the function call converter.

The function call converter 58 thus receives the call Calli for commands of the drawing command library associated with the first image rendering environment, S200, which call is a call for the drawing of an image using one or more drawing commands in the library. More particularly, it is a call for the use of commands in the previously-mentioned library of drawing functions. The function call converter 58 then continues and converts the at least one drawing command into at least one drawing instruction for being drawn in the second image rendering environment, S230, where the converting is made in a converting function of the function call converter. Then the function call converter 58 applies the instructions in the second image rendering environment 56 in order to draw the image I, S240.

It is possible that the call comprises instructions for forming at least two visual components within the image being linked to each other in an order. In this case the function call converter 58 may create a number of component functions, S210, where each function is dedicated to drawing a corresponding visual component. It may also create a linking function, S220, which linking function is set to link the components to each other according to the order. In this case, the converting function may be linked to the component functions by the linking function. The functions may all be realised as callbacks.

For the exemplified image I given above, this may be realized in the following way:
The mock command library 52, which implements the namespaces and classes of the original command library, may provide the graphics engine 50 with the ability to set callbacks when specific components are called. E.g. when a constructor for a derived class of a Visual is called from the graphics engine 50, a callback is invoked where the callback implementation of the callbacks, which is also a rendering implementation 54 of the callbacks, can take actions on the created visual together. Any visual created may provide an automatically created identity. When adding visuals as a child to another visual another callback is invoked, and when calling drawing functions from the graphics engine, yet another callback is invoked. An example of how the callback or rendering implementations could be implemented for an exemplifying SVG image in an HTML image rendering environment is shown below.

```
 namespace System.Windows.Media
 {
       public abstract class Visual
       {
              // Callback when creating the visual
              public static Action<Visual> OnCreateVisual;
              private static long nextId = 0;
              public Visual()
              {
                     // Increase the identity counter and set the id for the
                     visual
                     this.Id = Interlocked.Increment(ref nextId);
                     // Call the constructor callback
                     OnCreateVisual?.Invoke(this);
              }
              public long Id { get; private set;} }
       public class ContainerVisual : Visual
       {
              // Callback when adding a visual as a child to this container
              public static Action<Visual, Visual> OnChildAdded;
              // A collection of children for the container
              public List < Visual > Children = new();
              // Add a child to the children
              public void AddChild(Visual child)
              {
                     this.Children.Add(child);
                     OnChildAdded?.Invoke(this, child); } }
       public class DrawingVisual : Visual
       {
              // Callbacks
              public static Action<Visual> OnCreateDrawingContext;
              public DrawingContext OpenDrawingContext()
              {
                     var drawingContext = new DrawingContext(this);
                     OnCreateDrawingContext?.Invoke(this);
                     return drawingContext; } }
       public class DrawingContext : Visual
       {
              private const Visual parent;
       public DrawingVisual
       // Callbacks
       public static Action<visual, string, FontFamily, double, Point,
       Brush> OnDraw-Text;
       public static Action<visual, double, double, double, double, Brush,
       double, Brush> DrawRectangle;
       DrawingContext(Visual parent)
       {
              this.parent = parent; }
       // Drawing functions
       public void DrawText(string text, FontFamily family, double size,
       Point offset, Brush color)
       {
              OnDrawText?.Invoke(this, text, family, size, offset, color); }
       public void DrawRectangle(double x, double y, double width,
       double heigh, Brush strokeBrush, double strokeWidth, Brush fill)
       {
              OnDrawRectangle?.Invoke(this, x, y, width, height,
              strokeBrush, strokeWidth, fill);
              } }
              Before the graphics engine 50 executes the functions provided by the mock
              implementation, callbacks need to be connected to the callbacks.
              Visual.OnCreateVisual = (visual) = > {
       // Create a SVG <g> HTML element and add it to the root of the
       HTML Dom.
       // set the "id" attribute of the <g> element to the identity of the
       visual. };
       ContainerVisual.OnChildAdded = (parent, child) => {
       // Move the SVG <g> element with the identity of the child to be a
       // child of the SVG <g> element with identity of the parent element. };
       Drawing Visual. OnCreateDrawingContext = (visual) = > {
       // Create a SVG <g> element with the identity of the visual and add
       // it as a child on the parent visual };
       DrawingContext.OnDrawText = (visual, text, fontFamily, size, offset,
       color) = > {
       // Create a SVG <text> element and add it as a child to the SVG <g>
       // element with identity from the given visual
       // Set the attributes of the <text> element according to the given
       / / values.
       }
       DrawingContext.DrawRectangle = (visual, x, y, width, height, stroke,
       strokeWidth, fill) => {
       // Create a SVG <rect> element and add it as a child to the SVG <g>
       // element with identity from the given visual
       // Set the attributes of the <rect> element according to the given
       // values. };
```

Given the above code examples the callback architecture could be visualized according to the chart in fig. 7.

This allows the graphics engine component to believe that the render target is still a library in the first image rendering environment but all calls are redirected to a component that renders the data in the second image rendering environment. It also makes it possible to render to any type of rendering if the target render framework has the same or similar render capabilities as WPF. The requirements for the target framework could in turn be:
1. Retained mode drawing.
2. Hierarchical layout of render fragments.
3. Has build in transformations with 2D Matrix transformations.
4. Primitive rendering capabilities including rectangles, geometries, ellipses, images, and texts.
5. Input capabilities.

An image may be cyclically updated. This may be done because the image receives new values of the process data and/or inputs from the user. This is in the second image rendering environment 56 typically addressed through the use of a buffer, in the following termed a model. The model then normally includes the whole image.

When a graphics display is initially drawn or updated, the graphics engine will issue many drawing commands to the rendering layer. This can cause congestion if an update is made for each drawing command, especially if only small changes are made in the drawing.

When updating the second image rendering environment, in the present example in the form of an HTML Domain, whenever a change makes the graphics engine component 50 issue rendering commands can be very costly performance wise as the updates from the process control system 10 can be done rapidly.

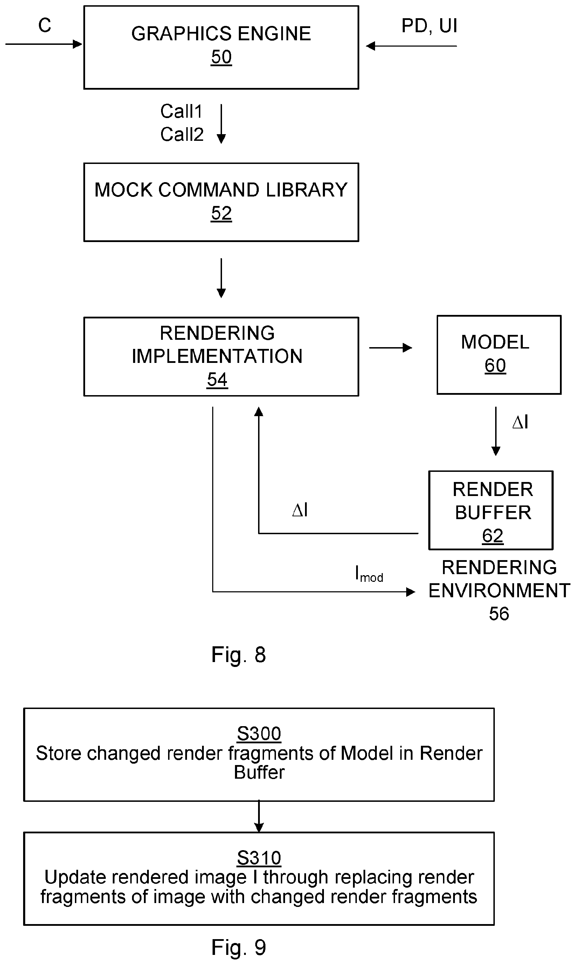

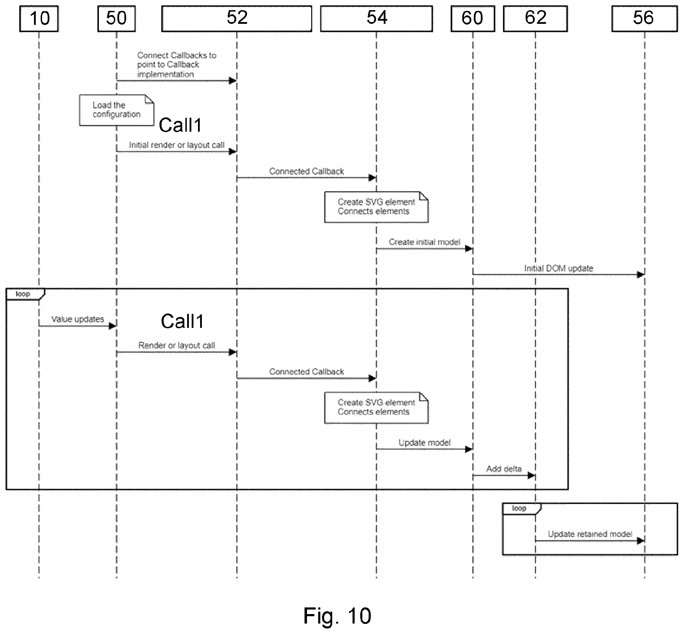

How this can be addressed will now be described with reference being made to fig. 8, 9 and 10, where fig. 8 schematically shows the graphics engine 50, the mock command library 52 and the rendering implementation 54 together with a model 60 and a render buffer 62, fig. 9 shows a number of method steps for the updating of a rendered image and fig. 10 shows a signal chart with signals sent between the different entities.

The rendering implementation 54 has a model 60 associated with the image being rendered, which model 60 is updated cyclically based on user input and/or process data from the process control system 10 and is further operative to control cyclical updating of the rendered image I. The updating may be performed by the image rendering device and more particularly by the rendering implementation 54 of the image rendering device. The user inputs may be user inputs of a user of the user terminal.

In this case, the model 60 comprises render fragments that together make up the image I. The render fragments may for instance be SVG elements that together make up an SVG image.

The cyclical updating involves at least one render fragment being changed based on the user input and/or process control data. However, all render fragments, changed and unchanged, are stored in the model 60.

In this case the function call converter 58 and more particularly the rendering implementation 54 of the function call converter 58, stores render fragments that are changed ΔI in the render buffer 62, S300. This may be performed by a further function of the rendering implementation 54, which further function may be realized through a further callback. Thus render fragments that are changed from one call, Calli, of the graphics engine 50 to another call, call2, are stored in the render buffer 62. The rendering implementation 54 then updates the rendered image Imod through replacing render fragments of the rendered image with corresponding changed render fragments from the render buffer 62, S310.

The rendering implementation 54 thus keeps a state of the drawing I to be rendered, where each drawing item may have an identifier. Whenever a draw command, i.e. call, is issued by the graphics engine 50, whether it is the initial creation of the image I or an update of the image I coming from process or user input, the model 60 of the rendering implementation 54 is updated to reflect that change. Instead of directly rendering this to the user terminal, the model 60 is updated.

Instead of rendering directly to the user terminal, a buffer 63 containing the changes is kept. The render buffer 62 is cyclically rendered to the user terminal.

Put differently, a retained model of the data created by the rendering or Callback implementation 54 is initially drawn in the second image rendering environment 56, such as in HTML DOM, and when a process or part of a process in the process control system changes state, this may get transformed into updates that cyclically are rendered to the second image rendering environment 56.

To achieve this a model 60 of the render state is introduced that keeps the state of all render fragments in memory. This model is created at initial render and state changes in the process or part of the process results in an update of the model 60. The model 60 or rendering implementation 54 then creates deltas ΔI, i.e. differences, identified and hashed by the visual identification.

An additional loop cyclically takes the render fragments from the buffer and sends them to the second image rendering environment 56.

Using this approach, it is possible to control how often the second image rendering environment 56 gets updated and will improve the performance.

It is possible to cyclically update images in another way.

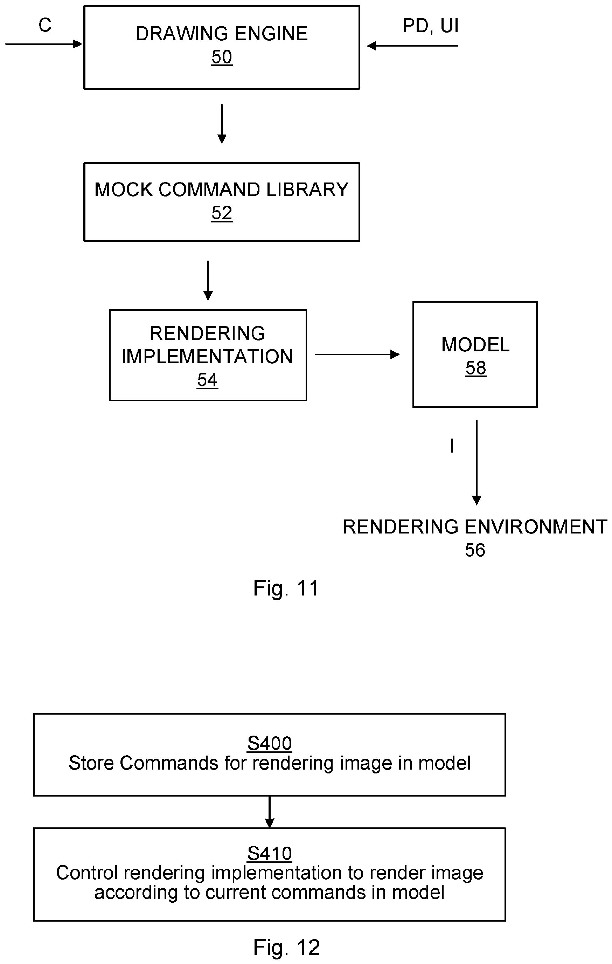

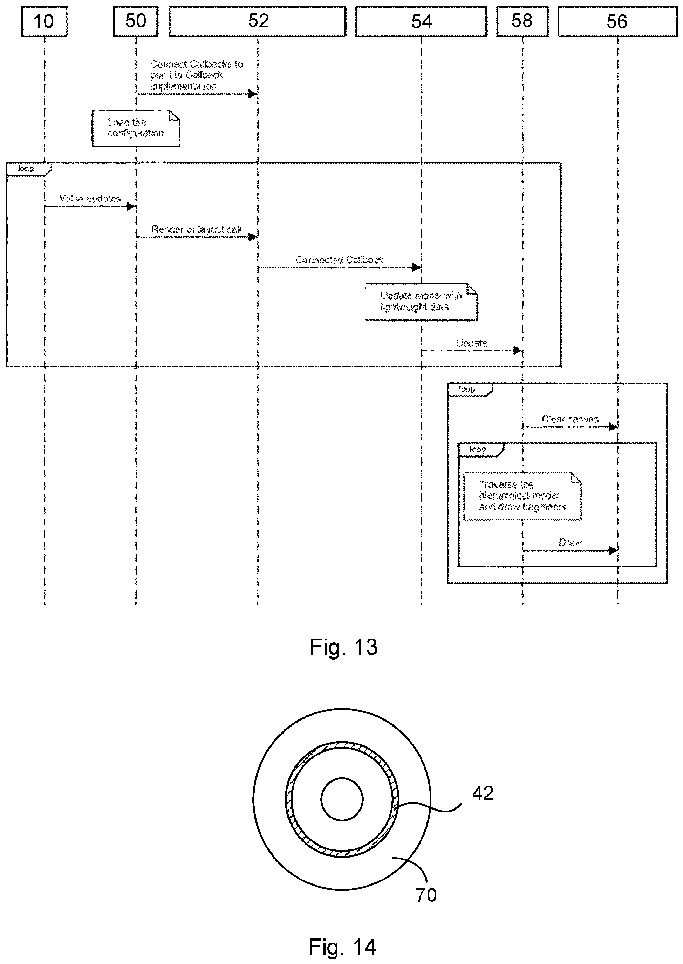

How this may be done will now be described with reference being made to fig. 11, 12 and 13, where fig. 11 schematically shows the graphics engine 50, the mock command library 52 and the rendering implementation 54 together with a model 60, fig. 12 shows a number of method steps for the updating of a rendered image and fig. 13 shows a signal chart with signals sent between the different entities.

In this case the rendering implementation 54 stores commands in the model 60 for rendering the image I. All the commands used to render the image I are thus stored in the model 60.

When a new call or drawing command is received, the rendering implementation 54 renders the image I according to the current commands in the model 60, which is done using all the commands in the model 60. The cyclical updating also involves replacing all commands in the model 60 when receiving a new call from the graphics engine 50. )

Thus, in the case of SVG, instead of assuming SVG rendering, light weight rendering commands may be kept in the model instead of already created SVG elements. This allows to instead of pushing changes to a render buffer, render the whole model cyclically to the user terminal. It is additionally possible that this is done through the callback or rendering implementation comprising a command translator that converts lightweight drawing commands to HTML Canvas rendering commands kept in the model 60.

The function call converter 58 and more particularly the rendering implementation 54 of the function call converter 58 may thus determine lightweight rendering commands for rendering the image, store the lightweight commands in the model 60 and translate the lightweight commands to actual commands for rendering the image.

Thus, according to this aspect, SVG render fragments stored in the Model or any Delta or render Buffer are not used. Instead, the model 60 is updated with the data needed to create any render fragment and kept in the memory of the model 60. So, for the example of SVG, instead of storing already calculated render fragments as HTML SVG group elements (<g>) or HTML SVG text elements (<text>), only the data needed to create such an element is stored in the model. No render or delta buffer is used when the state of a part of the model is changed.

This creates an already retained model of the state of the drawing within the model and a direct mode rendering approach can be applied using the model. One direct mode rendering approach for web is using Canvas.

Drawing and updating a display using Canvas requires the content of the Canvas to be fully deleted and for each frame the data is used in the model to render each part of the graphics display repeatedly. As a precalculated render fragment, such as an SVG element, is not kept in the model, nor in any render buffer, this can be done quickly as only references to already allocated data structures exists within the model.

As the model only contains lightweight render information the update between the Callback or rendering implementation and the model can be done without spending time to pre-calculate any SVG render fragments. Only information needed to create the render fragment is stored in the model.

To render the actual model, another render loop that is connected to the refresh rate of the user terminal, performs the actual rendering. For each frame, the canvas is cleared and the whole model is traversed hierarchically to draw the whole display with all render fragments repeatedly.

Thereby rendering will be less resource demanding in the form of memory consumption and allocation and possibly also put less load on the browser thread.

The model and the render buffer may be realized using one or more memories. As was mentioned earlier, the mock command library, rendering implementation and graphics engine may be provided in the form of a processor with associated program memory including computer program code for implementing these entities.

A computer program may also be a computer program product, for instance in the form of a non-transitory computer readable storage medium or data carrier, like a CD ROM disc, memory stick or memory card, carrying such a computer program with the computer program code, which will implement the above-described entities when being loaded into a processor. One such computer program product in the form of a CD ROM disc 70 with the above-mentioned computer program code 46 is schematically shown in fig. 14.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the invention is only to be limited by the following claims.

## Claims

1. An image rendering device (48) comprising a processor (34) configured to provide a function call converter (58) operative to:
receive, from a graphics engine (50) associated with a first image rendering environment, a call (Calli) for the use of commands in a library of drawing functions, the call (Calli) being a call for the drawing of an image (I) using one or more drawing commands in the library and which library is associated with the first image rendering environment,
convert, in a converting function, the at least one drawing command to at least one drawing instruction of a second image rendering environment; and
apply the at least one drawing instruction in the second image rendering environment in order to draw the image.

2. The image rendering device (48) according to claim 1, wherein the call (Calli) comprises instructions for forming at least two visual components within the image, the visual components being linked to each other in an order and the function call converter (58) being further operative to create a number of component functions, each component function being dedicated to a corresponding visual component as well as to create a linking function, set to link the component functions to each other according to said order.

3. The image rendering device (48) according to claim 2, wherein the converting function gets linked to the component functions by the linking function.

4. The image rendering device (48) according to claim 2 or 3, wherein the functions are provided as callbacks.

5. The image rendering device (48) according to claim 4, wherein the function call converter (58) comprises a mock command library (52) and a rendering function implementation, wherein the mock command library (52) implements the same interfaces as the library of drawing functions and is compiled against the graphics engine (50) and the rendering function implementation comprises rendering implementations (54) of functions created or provided in the function call converter (58).

6. The image rendering device (48) according to any previous claim, further comprising a model (60) associated with the image being rendered, wherein the function call converter (58) is operative to update the model (60) cyclically based on user input (UI) and/or process data (PD) from the process control system (10).

7. The image rendering device (48) according to claim 6, further comprising a render buffer (62) and wherein the model (60) comprises render fragments together making up the image (I), the cyclical updating involves at least one render fragment being changed based on said user input (UI) and/or process data (PD) and the function call converter (58) being further operative to store render fragments that are changed (ΔI) in the render buffer (62) and update the rendered image Imod through replacing render fragments with corresponding changed render fragments from the render buffer (62).

8. The image rendering device (48) according to claim 6, wherein the function call converter (58) is operative to store all commands used for creating the image in the model (60), the rendering of the image is performed using all the commands in the model (60) and the cyclical updating involves replacing all commands in the model when receiving a new call from the graphics engine (50).

9. The image rendering device (48) according to claim 8, the function call converter (58) being further operative to determine lightweight rendering commands for rendering the image, to store the lightweight rendering commands in the model and to translate the lightweight rendering commands to actual rendering commands for rendering the image.

10. The image rendering device (48) according to any previous claim, further comprising the graphics engine (50).

11. A user terminal (12) comprising an image rendering device (48) according to any previous claim.

12. A method of rendering an image that has been created in a first image rendering environment, the method being performed by an image rendering device (48) and comprising:
receiving (S200), from a graphics engine (50) associated with the first image rendering environment, a call (Calli) for the use of commands in a library of drawing functions, the call (Calli) being a call for the drawing of an image (I) using one or more drawing commands in the library and which library is associated with the first image rendering environment,
converting (S230), in a converting function, the at least one drawing command to at least one drawing instruction of a second image rendering environment; and
applying (S240) the at least one drawing instruction in the second image rendering environment in order to draw the image.

13. The method according to claim 12, wherein the call (Calli) comprises instructions for forming at least two visual components within the image, the visual components being linked to each other in an order and further comprising creating (S210) a number of component functions, each component function being dedicated to a corresponding visual component as well as creating (S220) a linking function set to link the component functions to each other according to said order.

14. A computer program for rendering an image that has been created in a first image rendering environment, the computer program comprising computer program code (42) which when run in a processor (32), causes the processor (32) to provide a function call converter (58) operative to:
receive, from a graphics engine (50) associated with a first image rendering environment, a call (Calli) for the use of commands in a library of drawing functions, the call (Calli) being a call for the drawing of an image (I) using one or more drawing commands in the library and which library is associated with the first image rendering environment, convert, in a converting function, the at least one drawing command to at least one drawing instruction of a second image rendering environment; and
apply the at least one drawing instruction in the second image rendering environment in order to draw the image.

15. A computer program product for rendering an image that has been created in a first image rendering environment, the computer program product comprising a data carrier (70) with the computer program code (42) according to claim 14.
